# EUROPEAN PATENT APPLICATION

(11) **EP 3 819 072 A1**
(43) Date of publication of application: **12.05.2021**
(21) Application number: 20202284.4
(22) Date of filing: 16.10.2020
(51) Int. Cl.: B23K 37/053

(54) **PIPE GRIPPING DEVICE**

(30) Priority: 06.11.2019 IT 201900020494
(71) Applicant: TPA Brianza Societa' Cooperativa, 23893 Cassago Brianza (LC) (IT)
(72) Inventor: CAZZANIGA, Rodolfo Giovanni, 23891 BARZANO' (LC) (IT)
(74) Representative: Corradini, Corrado

(57) **Abstract**

A pipe gripping device (1) comprises an external support frame (10) that defines a circular central opening (12) particularly adapted to house a pipe (2), and a plurality of thrust jaws (20) engaged at an end thereof (24) with the external support frame (10) and distributed circumferentially along the circular central opening (12). An activation element (50) is connected to the thrust jaws (20) and is particularly adapted to move the thrust jaws (20) from a clamping position in which the thrust jaws (20) exert pressure on an external circumferential surface of a pipe (2) housed within the circular central opening (12), and a disengagement position in which the thrust jaws (20) do not exert pressure on the external circumferential surface of the pipe (2). The thrust jaws are hinged to the external support frame (10).

## Description

### TECHNICAL FIELD

The present invention relates to the sector of processing pipes, and in particular large diameter pipes, e.g. gas pipelines. The present invention was developed with particular regard to a pipe gripping device.

### PRIOR ART

In the sector of pipelines for the delivery of liquid or gaseous materials, e.g. water or gas, large diameter steel pipes are used. Such pipes must be subjected to specific processes, e.g. welding, before being able to be used.

In large diameter pipe welding processes, it is necessary to have available a pipe gripping device that can lock and move the pipe during the welding process.

Different solutions of large diameter pipe gripping devices are known. The same Applicant has developed a device comprising a pair of jaws with a semi-circular internal profile and transversally movable with respect to the longitudinal extension axis of the pipe. Another device of the known type comprises a pair of jaws with a semi-circular profile and a tensioning and movement chain arranged around the external surface of the pipe.

One of the main requirements in the sector of processing large diameter pipes is that of being able to adapt to as many different pipe diameters as possible to be processed. Another requirement is that of being able to process a high diameter pipe, e.g. even 1,800 mm in diameter, by means of a device whose dimensions, mass and necessary energy for locking and moving the pipe are as contained as possible.

A further requirement is that of creating a device that is easy to use and maintain also in hostile environmental conditions, e.g. with high temperature and humidity parameters, or in the presence of high concentrations of particulate in the air.

The object of the present invention is that of providing a response to all the requirements indicated above by means of a pipe gripping device as defined in the following claims.

### DISCLOSURE OF THE INVENTION

In accordance with the aforesaid objects the present invention makes available a pipe gripping device comprising:
- an external support frame that defines a circular central opening particularly adapted to house a pipe,
- a plurality of thrust jaws engaged at an end thereof to the external support frame and distributed circumferentially along the circular central opening,
- an activation element connected to the thrust jaws and particularly suitable for moving the thrust jaws from a clamping position in which the thrust jaws exert pressure on an external circumferential surface of a pipe housed within the circular central opening, and a disengagement position in which the thrust jaws do not exert any pressure on the external circumferential surface of the pipe,
- the thrust jaws being hinged to the external support frame.

Thanks to such a solution it is possible to lock a wide range of pipes with different diameters with high thrust pressure, using a device that is easy to activate and maintain. Another aspect of the present invention envisages that the activation element is an elongated flexible element, a first end of the elongated flexible element being connected to the external support frame and the other end of the elongated flexible element being fixed to one of the thrust jaws.

Another aspect of the present invention envisages that every thrust jaw comprises an elongated main body, on which a central pinion, rotatably engaged at a median portion of the elongated main body, and an end pinion, rotatably engaged at an end portion of the elongated main body, are assembled.

Another aspect of the present invention envisages that the flexible element is further connected to the central pinion and to the end pinion of each thrust jaw.

Thanks to such a solution it is possible to use a single activation element for simultaneously moving all the thrust jaws, guaranteeing the self-centring of the pipe within the device.

Another aspect of the present invention envisages a plurality of frame pinions fixed to the external support frame, distributed circumferentially along an external portion of the external support frame, the flexible element passing onto said frame pinions.

Another aspect of the present invention envisages that at least two of said frame pinions are arranged between the hinged ends of two contiguous thrust jaws.

Another aspect of the present invention envisages an internal support frame coupled to the external support frame, and a system for constraining the movement of the thrust jaws engaged to said internal support frame.

Thanks to such a solution it is possible to synchronise and constrain the motion of the thrust jaws, and prevent one of the thrust jaws moving independently with respect to the others.

Another aspect of the present invention envisages that the constraining system comprises a plurality of frame pinions connected to the thrust jaws and a second chain passing through the plurality of frame pinions.

Another aspect of the present invention envisages that the constraining system comprises an articulated polygon composed of a plurality of rods, and a plurality of cranks distributed radially on the internal frame around the circular central opening, each rod being hinged to two contiguous cranks.

### BRIEF DESCRIPTION OF THE DRAWINGS

Further characteristics and advantages of the present invention shall become clearer from the following description, provided by way of example with reference to the appended figures wherein:
- figure 1 is an axonometric view of the gripping device of the present invention;
- figure 2 is a plan view of the external support frame and of the thrust jaws in the disengaged position;
- figure 3 is a plan view of a thrust jaw;
- figure 4 is a plan view of the external support frame of figure 2 and of the thrust jaws in the clamping position;
- figure 5 is a plan view of a further embodiment of the present invention in which the thrust jaws are in the disengagement position;

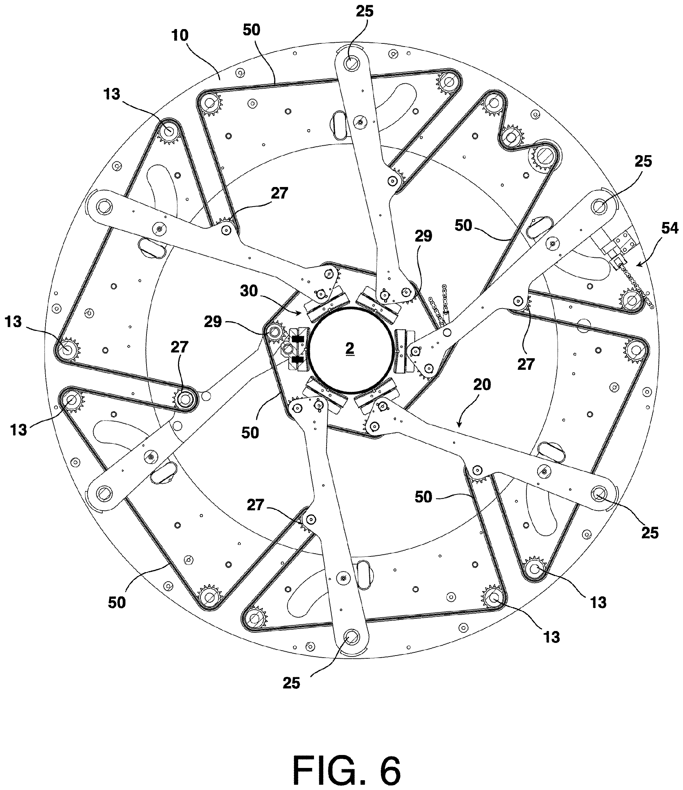

- figure 6 is a plan view of the embodiment of figure 5 in which the thrust jaws are in the clamping position;
- figure 7 is a plan view of the support frame and of the constraining system of the device of the present invention; and
- figure 8 is a plan view of a further embodiment of the constraining system of the device of the present invention.

To facilitate understanding, identical reference numbers have been used, to identify common identical elements in the figures. It is to be understood that elements and characteristics of an embodiment can be conveniently incorporated into other embodiments without any further specifications.

### BEST WAY TO ACTUATE THE INVENTION

Reference will now be made in detail to the various embodiments of the invention, one or more examples of which are illustrated in the appended figures. Each example is provided merely by way of illustration of the invention and is not intended as a limitation thereof. For example, the technical characteristics illustrated or described as they are part of an embodiment can be adopted on, or in association with, other embodiments for producing a further embodiment. It is to be understood that the present invention shall be inclusive of such modifications and variants.

It is also underlined that the present description is not limited in its application to the construction details and layout of the components as described in the following using the appended figures. The present description can envisage other embodiments to be implemented or put into practice with other technically equivalent characteristics. The terms used in the following have a merely descriptive aim and must not be considered as limiting.

A pipe gripping device according to the present invention, indicated generally with number 1, comprises an external support frame 10 defining a central opening 12. In the embodiment illustrated in the appended figures, the external support frame 10 has a circular crown or ring shape, the circular central opening of which 12 is particularly adapted to house a tubular element, e.g. a pipe or a pipeline 2. In this embodiment the centre of the circular central opening 12 corresponds to the centre of the circular crown constituting the external support frame.

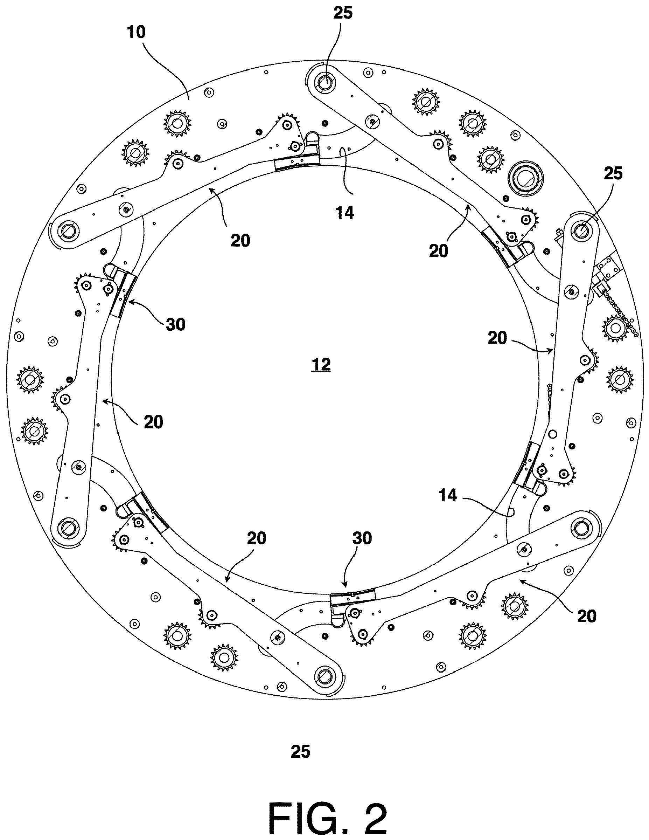

With particular reference to figure 2, the device 1 comprises a plurality of thrust jaws 20 connected to the external support frame 10. Preferably, the thrust jaws 20 are distributed radially around the circular central opening 12. Each thrust jaw 20 comprises an elongated main body 22, and is hinged to the external support frame 10 in a first end portion 24 thereof, by means of a pin 25.

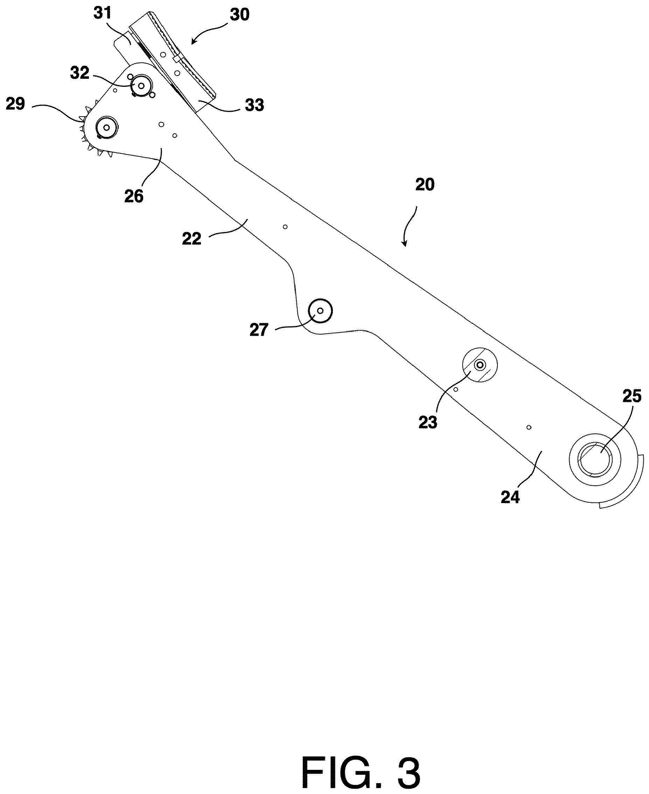

As is illustrated better in figure 3, each thrust jaw 20 comprises a clamp 30 rotatably connected to a second end portion 26 of the elongated main body 22. The clamp 30 which, as will become clearer below, is particularly adapted to enter into contact with the outer surface of a pipe 2, comprises a first portion 31 hinged by means of a pin 32 to the second end portion 26 of the thrust jaw 20, and a second portion 33 connected to the first portion 31. Preferably, the outer surface of the second portion is concave for being able to adapt better, in use, to the outer surface of a pipe 2.

According to a particularly advantageous characteristic, between the second portion 33 and the first portion 31 of the clamp 30 one or more resilient elements are arranged able, in use, to absorb and withstand external pressure forces due, for example, to displacements of the pipe 2.

Each thrust jaw 20 further comprises a slide 23 particularly adapted to slide within a rail 14 obtained in the external support frame 10.

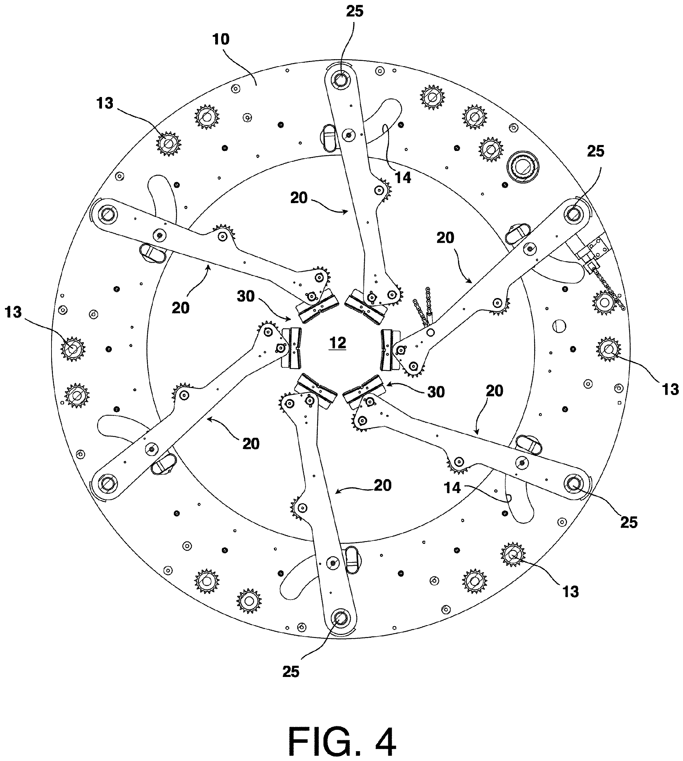

With particular reference to figure 4, the thrust jaws 20 are hinged to the external support frame 10 in a first end portion 24 thereof by means of a pin 25, so as to be movable, in use, with rotatory motion about an axial direction defined by the longitudinal axis of the pin 25. Such rotation is limited in its excursion by the extension of the guides 14, so that each thrust jaw 20 can move from an initial position in which the slide 23 abuts with a first end of the guide 14, to a final position in which the slide 23 abuts with a second end of the guide 14.

The pipe gripping device 1 according to the present invention further comprises an actuator element 50 connected to the thrust jaws 20 able, in use, to move the thrust jaws 20 from a disengagement position in which the clamps 30 are arranged superposed with the external support frame 10 (illustrated in figure 2), to a clamping position in which the thrust jaws 20 exert pressure on an external circumferential surface of a pipe 2 housed within the circular central opening 12 of the device 1 (illustrated in figure 3).

According to the preferred embodiment of the present invention, the thrust jaws 20 are movable from a disengagement position, in which the thrust jaws 20 do not exert any pressure on an external circumferential surface of a pipe 2 housed within the circular central opening 12 of the device 1, to a clamping position, in which the thrust jaws 30 exert pressure on said external circumferential surface of said pipe 2.

Thanks to this configuration it is possible to use the gripping device 1 of the present invention with a wide range of pipes with different diameters.

According to the embodiments illustrated in the appended figures, another advantageous characteristic is the uniform distribution of the thrust jaws 20 along the circumference of the circular central opening 12 of the device 1. Such configuration allows each pair of thrust jaws 20 arranged opposing one another, to exert on the pipe 2 housed in the device 1 the same pressure force along the same longitudinal axis F-F passing through the two contact points of the clamps 30 on the external surface of the pipe 2 but with opposite directions. The six thrust jaws 20 thus distributed further allow simultaneous axial containment and radial containment of the pipe 2 housed within the device 1.

Naturally, the number of thrust jaws 20 and the conformation thereof can vary with respect to what is described and illustrated, but without thereby departing from the scope of the present invention. For example, the number of thrust jaws 20 can be comprised from a minimum of two to a maximum determined by the dimensions of the frame and the dimensions of the thrust jaws 20 themselves.

The actuator element 50 can comprise different types of devices such as, for example, motors, pneumatic actuators, or any other device able to impart a rotatory movement to the thrust jaws 20.

According to one of the preferred embodiments of the present invention, and illustrated in the appended figures, the actuator element comprises a flexible elongated element, by way of non-limiting example, a chain 50.

A first end 51 of the chain 50 is fixed in proximity to the second end portion 26 of one of the thrust jaws 20, e.g. by means of a clamp 52. A second end 53 of the chain 50 is engaged with the external support frame 10 and, preferably, in proximity to the first end portion 24 of the same thrust jaw 20 to which the first end 51 of the chain 50 is fixed. The chain 50 is further slidably engaged with the thrust jaws 20 and with the external support frame 10 in a plurality of points.

With reference to figure 3, each thrust jaw 20 further comprises a central pinion 27, rotatably engaged at the median portion of the elongated main body 22, and an end pinion 29, rotatably engaged at the end portion 26.

The external support frame 10 comprises a plurality of frame pinions 13 arranged on the external edge and distributed circumferentially.

According to this configuration, the chain 50 defines a path in which the most proximal end portion to the clamp 52 passes onto the end pinions 29 at the end portion 26 of each thrust jaw 20, defining a first circular sub-path around the clamps 30. The remaining portion of path passes onto the frame pinions 13 arranged on the support frame 10 and onto the central pinions 27 at the median portion of each thrust jaw, defining a second circular sub-path external to the first sub-path.

The pipe gripping device 1 according to the present invention also comprises an activator element for activating the chain 50 able to move the chain along said path according to opposite directions. Also in this case, the chain 50 activator element can be a motor, a pneumatic actuator, or any other device able to impart a translation movement to the chain 50. Naturally, it is also possible to envisage manual movement of the chain 50 without thereby departing from the scope of the present invention.

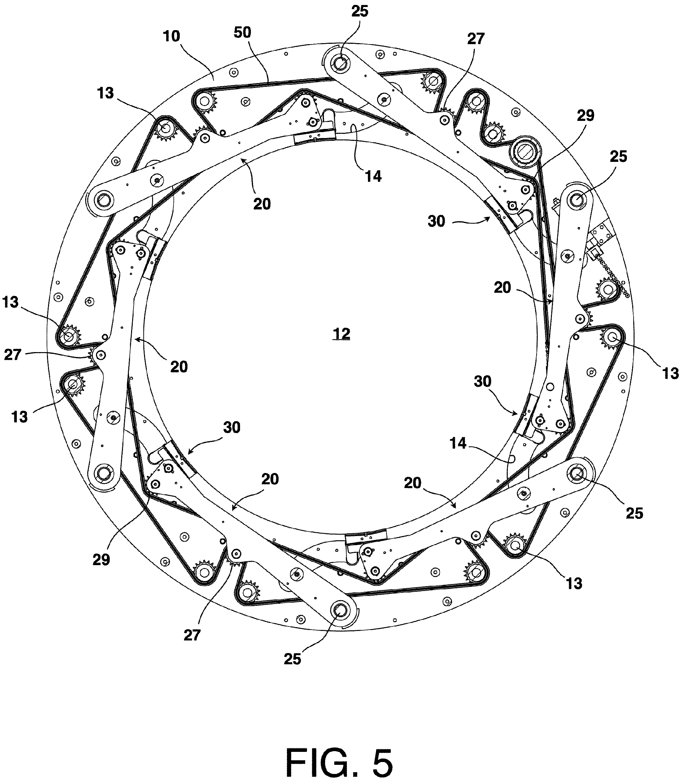

In use, starting from a disengagement position illustrated in figure 5, a translation of the chain 50 in a first direction, i.e. in the clockwise direction in the appended figures, determines, through the central pinions 27, a rotation of the thrust jaws 20 in the clockwise direction and therefore towards the centre of the circular central opening 12. At the same time, this movement causes a reduction of the extension of the first sub-path passing around the clamps 30 and an elongation of the second external sub-path. Once the clamps 30 of the thrust jaws have abutted on the outer surface of the pipe 2 inserted in the device 1 and exert a predetermined grip pressure, the translation of the chain 50 is interrupted.

To release the pipe 2, a translation of the chain 50 into a second direction opposite the first, i.e. in the anti-clockwise direction in the appended figures, determines through the central pinions 27 a rotation of the thrust jaws 20 in the anti-clockwise direction and therefore towards the external support frame 10. At the same time, this movement causes a reduction of the extension of the first sub-path passing around the clamps 30 and an elongation of the second external sub-path.

Thanks to this solution the device is provided with a single activation point able to simultaneously move all the thrust jaws 20 promoting the self-centring of the pipe 2 within the device 1.

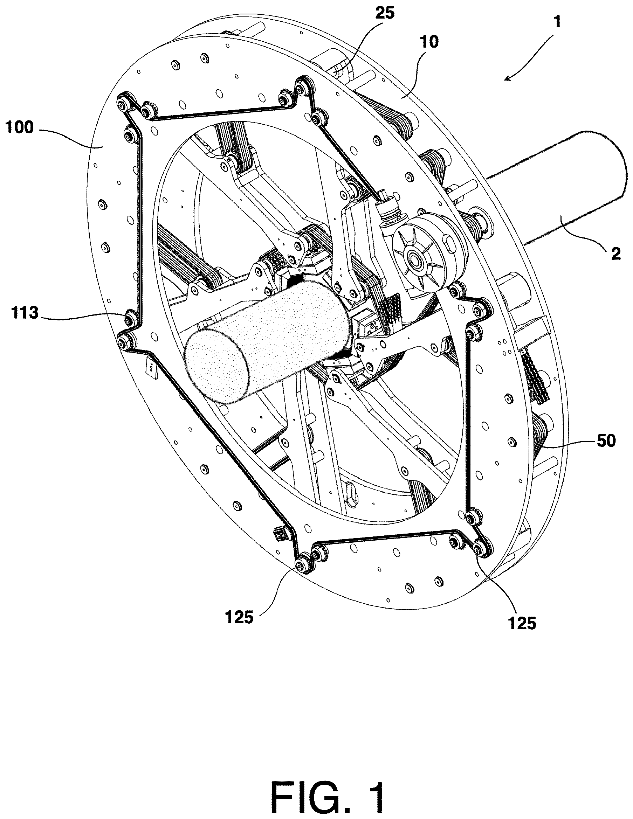

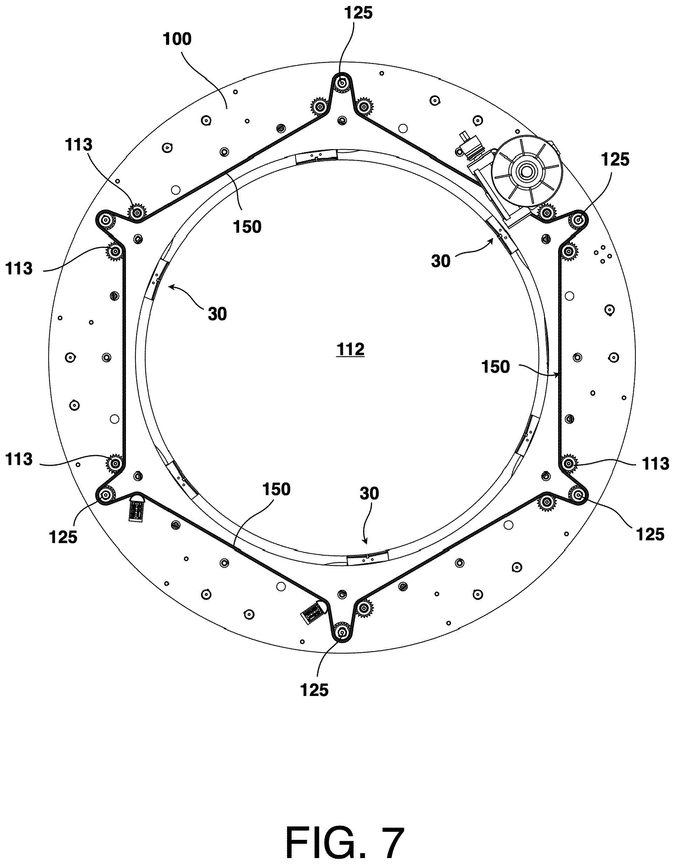

According to a further embodiment of the present invention, illustrated in figures 1 and 7, the pipe gripping device 1 also comprises an internal support frame 100 coupled to the external support frame 10.

The internal support frame 100 also has a circular crown or ring shape, the circular central opening 112 of which has a diameter corresponding to the diameter of the circular central opening 12 of the external support frame 10. In this embodiment the centre of the circular central opening 112 corresponds to the centre of the circular crown constituting the internal support frame 100. As can be seen in the figures, the two frames 10, 100 are coupled to one another so that the two central openings 12, 112 are aligned.

The device 1 also comprises a system for constraining the movement of the thrust jaws 20. In the embodiment illustrated in figure 7, the constraining system comprises a plurality of frame pinions 113, 125 engaged with the internal frame 100. Some pinions 125 of this plurality of frame pinions 113, 125 are connected to the thrust jaws 20.

The constraining system then comprises a constraining member, e.g. a second chain 150 passing through the plurality of frame pinions 113, 125.

In use, a rotation of one of the thrust jaws 20 also brings into rotation the pinion 125 connected thereto which through the translation of the chain 150 also imparts the rotation of the other pinions 125 and therefore of the remaining thrust jaws 20.

In this way it is possible to synchronise and constrain the motion of any of the thrust jaws 20 with the remaining thrust jaws 20, i.e. prevent one of the thrust jaws 20 from moving independently with respect to the others.

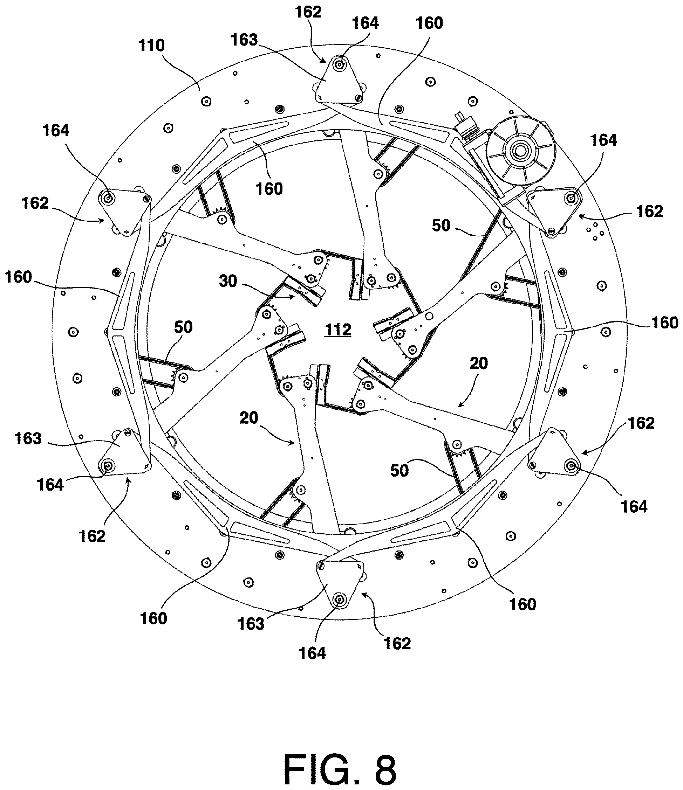

According to a further embodiment of the present invention, the constraining system of the device 1 comprises, as a constraining member, an articulated polygon composed of a plurality of rods 160. In the example reproduced in figure 8, the articulated polygon is an articulated hexagon comprising six rods 160 or rockers.

The articulated polygon further comprises a plurality of cranks 162 distributed radially on the internal frame 110 around the circular central opening 112.

Each crank 162 comprises a main body 163 and is movable in rotation about a pin 164 fixed to the internal frame 110 and arranged eccentric with respect to the main body 163. Each pin 164 is connected to a respective thrust jaw 20.

Each rod 160 is arranged between two contiguous cranks 162. Each rod 160 is hinged to the portion of the main body 163 of the crank 162 furthest away from the other crank 162 to which the other end of the rod 160 is hinged so that the ends of two rods 160 connected to the same crank 162 are mutually superposed crossing over.

According to this configuration every rotation movement, regardless of whether it is clockwise or anticlockwise, of a crank 162, causes the roto-translation of the rods 160 connected thereto and a simultaneous rotation, in the same rotation direction, of the adjacent cranks 162.

As in the case of the embodiment previously described, the constraining system makes it possible to synchronise and constrain the motion of any of the thrust jaws 20 with the remaining thrust jaws 20, i.e. prevent one of the thrust jaws 20 from moving independently with respect to the others.

All the details can be replaced with other technically-equivalent elements. Likewise, the materials used, and the contingent shapes and sizes, may be any according to the requirements but without thereby departing from the scope of protection of the following claims.

## Claims

1. A pipe gripping device (1) comprises:
- an external support frame (10) that defines a circular central (12) opening adapted to house a pipe (2),
- a plurality of thrust jaws (20) hinged at an end (24) thereof to the external support frame (10) and distributed circumferentially along the circular central opening (12),
- an activation element (50) connected to the thrust jaws (20) and adapted to move the thrust jaws (20) from a clamping position in which the thrust jaws (20) exert pressure on an external circumferential surface of a pipe (2) housed within the circular central opening (12), and a disengagement position in which the thrust jaws (20) do not exert pressure on the external circumferential surface of the pipe (2),
- the thrust jaws (20) being hinged to the external support frame (10).

2. The gripping device (1) according to claim 1 wherein the activation element (50) is an elongated flexible element, a first end of the elongated flexible element (10) being connected to the external support frame and the other end of the elongated flexible element (10) being fixed to one of the thrust jaws (20).

3. The gripping device (1) according to claim 2, wherein a thrust jaw (20) comprises an elongated main body (22), on which a central pinion (27), rotatably engaged at a median portion of the elongated main body (22), and an end pinion (29), rotatably engaged at an end portion (26) of the elongated main body (22) are assembled.

4. The gripping device (1) according to claim 3, wherein the flexible element (50) is further connected to the central pinion (27) and to the end pinion (29) of each thrust jaw (20).

5. The gripping device (1) according to claim 4, wherein a plurality of frame pinions (13) are fixed to the external support frame (10) distributed circumferentially along an external portion of the external support frame (10), the flexible element (50) passing onto said frame pinions (13).

6. The gripping device according to claim 5, wherein at least two of said frame pinions (13) are arranged between the hinged ends (24) of two contiguous thrust jaws (20).

7. The device according to any one of the preceding claims, **characterised in that** it comprises an internal support frame (100) coupled to the external support frame (10), and a system for constraining the movement of the thrust jaws (20) engaged with said internal support frame (100).

8. The device according to claim 7 wherein the constraining system comprises a plurality of frame pinions (125) connected to the thrust jaws (20) and a second chain (150) passing through the plurality of frame pinions (125).

9. The device according to claim 7, wherein the constraining system comprises an articulated polygon composed of a plurality of rods (160), and a plurality of cranks (162) distributed radially on the internal frame (110) around the circular central opening (112), each rod (160) being hinged to two contiguous cranks (162).
